# EUROPÄISCHE PATENTSCHRIFT

(11) **EP 3 141 797 B1**
(45) Veröffentlichungstag und Bekanntmachung des Hinweises auf die Patenterteilung: **24.01.2018**
(21) Anmeldenummer: 16187763.4
(22) Anmeldetag: 08.09.2016
(51) Int. Cl.: F21K 9/61, F21S 8/10, F21W 101/02, F21V 8/00, B60Q 1/00

(54) **LINIENLEUCHTE**
LINE ILLUMINATION DEVICE
ÉCLAIRAGE LINEAIRE

(30) Priorität: 10.09.2015 DE 102015115265
(43) Veröffentlichungstag der Anmeldung: 15.03.2017
(73) Patentinhaber: Schott AG, 55122 Mainz (DE)
(72) Erfinder: Schabacker, Stephan, 60327 Frankfurt (DE); Senner, Eric, 55546 Hackenheim (DE); Russert, Hubertus, 55270 Jugenheim (DE)
(74) Vertreter: Blumbach · Zinngrebe Patent- und Rechtsanwälte

(56) Entgegenhaltungen:
- EP-A2- 1 122 487
- WO-A1-2007/047304
- DE-A1-102012 208 810
- DE-A1-102013 015 907
- DE-U1-202008 011 063
- US-B1- 6 523 986

## Beschreibung

### Gebiet der Erfindung

Die Erfindung betrifft eine seitenemittierende Linienleuchte. Insbesondere betrifft die Erfindung eine Linienleuchte welche als Konturenbeleuchtung für Fahrzeuge, insbesondere als Außenbeleuchtung, Verwendung findet. Im Speziellen betrifft die Erfindung ein Trittbrett mit einer Linienleuchte.

Die erfindungsgemäße Linienleuchte kann aber auch für andere Anwendungen, insbesondere im Gebäude- und Möbelbereich Verwendung finden.

### Hintergrund der Erfindung

Konturenbeleuchtungen finden insbesondere durch die Verbreitung der LED-Technik vermehrt Verwendung. Dies gilt unter anderem auch für den Fahrzeugbereich.

Das Dokument DE 20 2008 011 063 U1 (Schott AG) zeigt eine Beleuchtungsvorrichtung für Fahrzeuge, welche insbesondere als Trittbrettbeleuchtung vorgesehen ist.

Nachteilig an bekannten Konturbeleuchtungen für Fahrzeuge ist zumeist deren aufwendiger Einbau. So erfordert beispielsweise die in vorstehendem Dokument beschriebene Matte einen Einbau in ein Gehäuse. Dieses muss in der Regel auch noch wasser- und staubdicht ausgestaltet sein.

Auch ist es schwierig, mit derartigen Systemen eine konturenscharfe, abgegrenzte linienförmige Leuchte bereit zustellen, welche bei Tageslicht kaum sichtbar ist.

Das Dokument WO 2007/047304 A1 zeigt einen Lichtleiter, welcher mittels eines Klemmelements in eine Nut eingebracht ist.

### Aufgabe der Erfindung

Der Erfindung liegt demgegenüber die Aufgabe zugrunde, eine Linienleuchte bereit zu stellen, welche robust ist und auf einfache Weise eingebaut werden kann.

Weiter soll eine konturenscharfe Beleuchtung gewährleistet sein und im nicht-beleuchteten Zustand soll die erfindungsgemäße Linienleuchte möglichst wenig sichtbar sein.

### Zusammenfassung der Erfindung

Die Aufgabe der Erfindung wird bereits durch eine Linienleuchte nach einem der unabhängigen Ansprüche gelöst.

Bevorzugte Ausführungsformen und Weiterbildungen der Erfindung sind dem Gegenstand der jeweiligen Unteransprüche zu entnehmen.

Die Erfindung betrifft eine Linienleuchte, also eine Leuchte bei welcher das Licht entlang einer Linie abgestrahlt wird. Diese Linie ist vorzugsweise gerade, kann aber auch gebogen sein.

Die Linienleuchte umfasst einen seitenemittierenden transparenten Lichtleiter aus Glas.

Vorzugsweise ist der seitenemittierende transparente Lichtleiter als Glasstab ausgebildet. Es handelt sich also um ein starres Bauelement. Vorzugsweise hat der Glasstab einen Durchmesser von 0,2 bis 10 mm, bevorzugt von 0,5 bis 5 mm und besonders bevorzugt von 2 bis 4 mm.

Als derartiger Lichtleiter kann insbesondere ein Lichtleiter verwendet werden, wie er in der Offenlegungsschrift DE 10 2012 208 810 A2 beschrieben ist. Ein derartiger Lichtleiter besteht aus einem Glasstab welcher eine Seele aus Farbglas, insbesondere eine Seele aus weißem Farbglas umfasst. Der Glasstab umfasst ein Hüllmaterial (cladding) mit einer niedrigeren Brechzahl als der Glasstab selbst, so dass es an den Wänden des Glasstabs zu Totalreflektionen kommt, was die Weiterleitung von Licht ermöglicht. Die in dem Glasstab befindliche Seele aus Farbglas wirkt als Streuzentrum und koppelt zur Seite hin Licht aus. Der Glasstab hat vorzugsweise den fünf bis zwanzigfachen Durchmesser wie die Seele aus Farbglas. So entsteht eine abgegrenzte, konturenscharfe Linie.

Die Seele aus Farbglas kann, muss aber nicht, genau in der Mitte des Glasstabs positioniert sein, sondern kann auch deaxial positioniert sein. Dies ermöglicht die gerichtete Auskopplung eines größeren Teils des Lichts zur Seite hin, da der Glasstab als Linse wirkt. Ein derartiger Glasstab kann beispielsweise hergestellt werden, indem ein Farbglasstäbchen mit mehreren Stäbchen aus transparentem Material gebündelt wird und hieraus im Ziehverfahren ein Glasstab gezogen wird. Durch die Positionierung des Farbglasstäbchens innerhalb der anderen Stäbchen wird die Position der Farbglasseele bestimmt.

Es versteht sich, dass anstatt einer Farbglasseele auch ein Glas mit größeren Partikeln, die als Streuzentrum wirken, verwendet werden kann.

Der seitenemittierende transparente Lichtleiter aus Glas wird formschlüssig mittels eines Montageelements in einem Profil gehalten.

Es ist insbesondere vorgesehen, ein Montageelement aus einem Kunststoff, wie beispielsweise aus Gummi, zu verwenden und dieses in ein Profil, insbesondere ein Metallprofil, einzuschieben oder einzuclipsen.

Vorzugsweise wird das Montageelement zusammen mit dem seitenemmitierenden transparenten Lichtleiter in das Profil eingezogen.

Das Montageelement besteht vorzugsweise aus einem flexiblem Kunststoff wie beispielsweise Gummi oder Silikon, insbesondere mit einer Härte Shore A von weniger als 90, bevorzugt weniger als 80.

Vorzugsweise umschließt das Montageelement den Lichtleiter um mindestens 270°. Der Öffnungswinkel der Linienleuchte zum Betrachter beträgt weniger als 90°, vorzugsweise liegt er zwischen 30 und 90°.

Das Montageelement ist mithin vorzugsweise ebenfalls als Profil, insbesondere als Kunststoffprofil, ausgebildet.

Das Montageelement und/oder das Profil weisen korrespondierende Formschlusselemente auf, mit welchen das Montageelement gesichert wird.

Gleichzeitig hält das Montageelement formschlüssig den transparenten Lichtleiter aus Glas in Position.

Vorzugsweise ist das Montageelement gegenüber dem Profil gegen Verdrehen gesichert, insbesondere mittel vorstehend beschriebener Formschlusselemente.

Es hat sich gezeigt, dass ein derartiges System erstaunlich robust und wetterbeständig ist.

Weiter ist ein derartiger transparenter Glasstab im nicht-beleuchteten Zustand unauffällig, da der Betrachter mit Ausnahme der Seele aus Farbglas durch den Stab hindurch schauen kann.

Das Licht wird in den Glasstab an einer, vorzugsweise an beiden Seiten eingekoppelt, wobei sich die Lichtquelle vorzugsweise in einer Kappe befindet, welche auf das Profil aufgesetzt wird.

Bei einer Weiterbildung der Erfindung ist auf einer Rückseite des Lichtleiters, also der dem Betrachter abgewandten Seite, das Montageelement und/oder das Profil dunkel.

Insbesondere hat die hinter dem Lichtleiter aus Glas liegende Fläche im L*a*b*-Farbraum ein L*-Wert von unter 40, vorzugsweise von unter 30, besonders bevorzugt von unter 15.

Die Fläche ist vorzugsweise schwarz oder dunkelgrau ausgebildet.

Insbesondere unterscheidet sich der a*-Wert vom b*-Wert um maximal 10, vorzugsweise um maximal 5. Vorzugsweise liegen der a*- und der b*-Wert bei unter 20, vorzugsweise bei unter 10.

Die Kombination eines dunklen Hintergrunds mit einem transparenten Glasstab ermöglicht eine fast unsichtbare Ausgestaltung der Linienleuchte bei im nicht-beleuchteten Zustand.

Eine Außenseite des Glasstabs ist vorzugsweise unmittelbar außen an der Linienleuchte angeordnet. Das Licht wird mithin nicht durch eine Scheibe oder andere Bauelemente abgestrahlt. Dies ermöglicht eine einfache Ausgestaltung der Leuchte. Dennoch ist die erfindungsgemäße Linienleuchte wetterfest und robust. Der transparente Lichtleiter aus Glas liegt mithin von einer Betrachterseite aus gesehen vorzugsweise frei.

Gemäß der Erfindung ist der transparente Lichtleiter aus Glas gegenüber dem angrenzenden Profil rückversetzt, insbesondere um mindestens 0,5 mm, vorzugsweise um mindestens 1 mm.

Der transparente Lichtleiter aus Glas ist mithin in das Profil eingelassen wodurch Beschädigungen des Glasstabs vermieden werden. Der Glasstab hat vorzugsweise einen Durchmesser von weniger als 10 mm, besonders bevorzugt von weniger als 5 mm. Ist der Lichtleiter aus Glas beispielsweise in ein Trittbrett eingebaut, so wird durch das angrenzende Profil ein Kontakt zum Beispiel mit dem Schuh des einsteigenden Fahrzeuginsassen vermieden.

Weiter umfasst das Montageelement gemäß der Erfindung seitlich über den Lichtleiter hinausragende Flügel, welche den Lichtleiter aus Glas ebenfalls vor mechanischem Kontakt schützen.

Bei einer Ausführungsform der Erfindung ist der transparente Lichtleiter aus Glas über einen flexiblen Lichtleiter mit einer abgewinkelt angeordneten LED-Lichtquelle verbunden.

Es ist insbesondere vorgesehen, als flexiblen Lichtleiter ein Glasfaserkabel zu verwenden. Dieses kann beispielsweise an beiden Enden mit einer Hülse terminiert sein. Auf einer Seite wird der Lichtleiter aus Glas und auf der anderen Seite wird die LED-Lichtquelle angeschlossen. Dies ermöglicht eine kompakte Ausgestaltung, bei welcher der Lichtleiter aus Glas nah an der Außenseite angeordnet sein kann, ohne dass die LED-Lichtquelle herausschaut. Insbesondere ist der Lichtleiter aus Glas weniger als 10 mm gegenüber dem angrenzenden Profil rückversetzt.

Als LED-Lichtquelle kann beispielsweise eine fluiddichte LED-Lichtquelle verwendet werden.

Alternativ oder in Kombination ist auch denkbar, den Lichtleiter aus Glas und/oder den flexiblen Lichtleiter gegenüber einem angrenzenden Gehäuse abzudichten, indem beispielsweise der Lichtleiter durch eine Dichtung geführt wird. Das Gehäuse kann beispielsweise auch als Kappe des Profils ausgebildet sein. In dem so geschaffenen fluiddichten Raum kann auch eine LED-Lichtquelle angeordnet sein, welche selbst nicht fluiddicht ist.

Alternativ zu einem Anschluss über einen flexiblen Lichtleiter ist insbesondere vorgesehen, den Lichtleiter aus Glas randseitig schräg zu terminieren und das Licht über eine seitlich angeordnete LED-Lichtquelle einzustrahlen. Durch eine Totalreflektion an der schräg angeordneten Fläche wird das Licht in den Lichtleiter aus Glas eingekoppelt.

Diese Ausführungsform ermöglicht eine noch kompaktere Ausgestaltung, ist allerdings mit dem Nachteil verbunden, dass es im Randbereich zu einer inhomogeneren Lichtintensitätsverteilung kommen kann.

Die Erfindung betrifft des Weiteren eine Linienleuchte, insbesondere eine Linienleuchte, wie sie vorstehend beschrieben ist, welche also einen seitenemittierenden, transparenten Lichtleiter aus Glas umfasst.

Der seitenemittierende transparente Lichtleiter aus Glas umfasst eine Farbglasseele zum seitlichen Einkoppeln von Licht. Mittels eines Glasfaserkabels, welches flexibel ist, ist der seitenemittierende transparente Lichtleiter an eine Lichtquelle, insbesondere an eine LED-Lichtquelle, angeschlossen.

Das Farbglas der Farbglasseele besteht vorteilhaft aus einem Glas, in das Streuzentren eingelagert sind. Die Streuzentren des Farbglases werden in der Regel durch Phasentrennung und/oder Entmischung des Glases erzeugt. Beispielsweise kann das Farbglas ein Silikatglas sein, in das Streuzentren eingelagert sind, die einen erhöhten Gehalt an Läutermittel enthalten und die durch Phasentrennung und/oder Entmischung erzeugt wurden. Ein solches Glas kann als Farbglas kommerziell von verschiedenen Herstellern bezogen werden. Der erhältliche Glasstab mit einem Durchmesser von einigen Millimetern wird üblicherweise für die Herstellung der Farbglasseele zu einer typischen Dicke von zwischen etwa 100 µm und 1 mm wie zuvor beschrieben ausgezogen.

Das Glasfaserkabel ist vorzugsweise zumindest gegenüber dem seitenemittierenden Lichtleiter mittels einer Hülse terminiert.

Insbesondere wird eine vorzugsweise topfförmige Hülse aus einem transparenten Kunststoff verwendet. Das Glasfaserkabel ist in der Regel eingeschlaucht. Es handelt sich also um ein Bündel aus Glasfasern. Diese bestehen jeweils aus einem Kernglas, welches mit einem Material niedrigerer Brechzahl (cladding) umhüllt ist, um Totalreflektionen zu erreichen.

Zum Terminieren des Glasfaserbündels kann dessen Ende mit, vorzugweise aber ohne Schlauch in die Hülse eingeführt werden und dort mittels eines eingefüllten Klebstoffs befestigt werden. Insbesondere kann ein transparenter UVhärtender Klebstoff verwendet werden.

Um zu vermeiden, dass randseitig direkt in die Farbglasseele Licht eingekoppelt wird, umfasst ein Boden der Hülse gegenüber der Farbglasseele einen nach innen ragenden Dorn oder ist abgedeckt, insbesondere eingefärbt.

Vorzugsweise umfasst der Boden gegenüber der Farbglasseele einen Dorn, welcher im Bereich der Farbglasseele die einzelnen Glasfasern des Glasfaserkabels verdrängt, so dass im Bereich der Farbglasseele weniger oder kein Licht eingekoppelt wird.

Alternativ ist aber auch denkbar, den Bereich gegenüber der Farbglasseele einfach abzudecken beziehungsweise einzufärben. Diese Ausführungsvariante hat allerdings den Nachteil, dass das in diesem Bereich durch das Glasfaserkabel geführte Licht überwiegend verloren geht. Die Erfindung betrifft des Weiteren eine Linienleuchte, insbesondere wie vorstehend beschrieben, welchen einen seitenemittierenden, transparenten Lichtleiter aus Glas umfasst, der zumindest eine Farbglasseele zum Auskoppeln von Licht aufweist. In zumindest ein Ende des seitenemittierenden Lichtleiters wird Licht eingekoppelt.

Vorzugsweise wird das Licht mittels einer direkt an das Ende des seitenemittierenden Lichtleiters angrenzenden Lichtquelle, insbesondere eine LED-Lichtquelle, eingekoppelt.

Gemäß der Erfindung ist das Ende des seitenemittierenden Lichtleiters im Bereich der Farbglasseele maskiert.

Die Farbglasseele ist also, wie bereits vorstehend ausgeführt, abgedeckt, wodurch im Bereich der Farbglasseele kein Licht oder weniger Licht in den Lichtleiter eingekoppelt wird, was Inhomogenitäten verringert.

Die Maskierung kann sowohl auf der Seite der Lichtquelle, insbesondere an einem Gehäuse der Lichtquelle, angeordnet sein.

So kann beispielsweise ein Gehäuse mit einem transparenten Boden verwendet werden, welcher im Bereich der Farbglasseele lichtundurchlässig ausgebildet ist.

Weiter kann das Gehäuse im Bereich der Farbglasseele eine lichtundurchlässige Abdeckung umfassen, welche beispielsweise mittels zumindest eines Stegs mit einer Seitenwand des Gehäuses verbunden ist.

Bei einer anderen Ausführungsform der Erfindung ist der seitenemittierende Lichtleiter selbst im Bereich der Farbglasseele maskiert.

Neben einer Hülse mit einem lichtundurchlässigen Fleck ist dies beispielsweise durch eine Beschichtung des Endes des seitenemittierenden Lichtleiters im Bereich der Farbglasseele möglich.

Die erfindungsgemäße Linienleuchte findet insbesondere in Fahrzeugen Verwendung. Dabei ist auch denkbar, das Licht einer RGB-Lichtquelle einzukoppeln, so dass die Lichtfarbe verändert werden kann.

Wegen der Robustheit kann die Linienleuchte insbesondere im Außenbereich verwendet werden. Aber auch eine Verwendung als Konturenbeleuchtung im Innenraum ist denkbar. Weitere Anwendungsmöglichkeiten sind beispielsweise aber auch medizinische Geräte, insbesondere Konturenbeleuchtungen von Behandlungsstühlen, Operationssälen, Tomographen, Röntgengeräten, etc.

Weiter können, insbesondere als Außenbeleuchtung, Linienleuchten mit einer Länge von über 1 m, vorzugsweise von über 3 m bereit gestellt werden. Hierdurch kann beispielsweise auch eine Konturbeleuchtung für LKWs bereit gestellt werden.

Denkbar ist auch eine Verwendung als Gangbeleuchtung eines Flugzeugs oder Schiffs, als eine beleuchtete Fensterkontur, als eine Konturenbeleuchtung im Küchenbereich oder bei einem Möbelstück. Weiter können beispielsweise Bedienelemente oder Sitze beleuchtet werden. Denkbar sind auch Schaltschränke, Spielekonsolen, Öfen, Kamine, Möbel und Designelemente an Leuchten selbst.

Schließlich ist auch denkbar Funktions- oder Statusanzeigen als Linienleuchte auszugestalten. Weiter ist denkbar die Nachtbeleuchtung in einem Fahrzeugcockpit teilweise aus erfindungsgemäßen Linienleuchten auszubilden.

### Kurzbeschreibung der Zeichnungen

Der Gegenstand der Erfindung soll im Folgenden bezugnehmend auf die Zeichnungen Fig. 1 bis Fig. 8 näher erläutert werden.
- Fig. 1: zeigt eine Schnittansicht einer ersten Ausführungsform einer erfindungsgemäßen Linienleuchte.
- Fig. 2: zeigt ein Ausführungsbeispiel in einer perspektivischen Ansicht.
- Fig. 3: Bezugnehmend auf Fig. 3 soll die Ausführungsvariante mit einem transparenten Lichtleiter aus Glas näher erläutert werden.
- Fig. 4: Bezugnehmend auf Fig. 4 soll die Ankopplung des Lichtes an den transparenten Lichtleiter aus Glas erläutert werden
- Fig. 5: zeigt eine alternative Ausführungsform einer Einkopplung von Licht. Fig. 6 Bezugnehmend auf Fig. 6 soll eine nicht erfindungsgegenständliche Leuchte erläutert werden, bei welcher ein Glasfaserkabel, das flexibel ist, verwendet wird.
- Fig. 7: zeigt in einer schematischen Darstellung, wie eine LED-Lichtquelle direkt an einen Lichtleiter aus Glas angekoppelt ist.
- Fig. 8: ist eine schematische Darstellung einer mit einer Verkleidung versehenen Fahrzeugtür, in welche ein nicht erfindungsgegenständliches seitenemittierendes Glasfaserkabel eingesetzt ist.

### Detaillierte Beschreibung der Zeichnungen

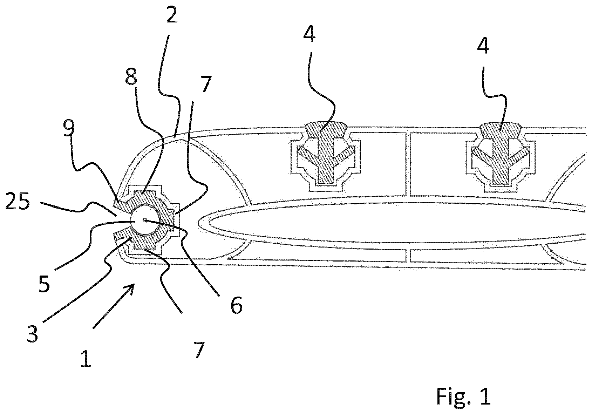

Fig. 1 zeigt in einer ersten Ausführungsform eine Schnittansicht einer erfindungsgemäßen Linienleuchte 1.

Die Linienleuchte 1 ist in diesem Ausführungsbeispiel als Trittbrett ausgestaltet und umfasst ein Profil 2, welches insbesondere aus Aluminium ausgebildet sein kann. Es handelt sich um ein Hohlkammerprofil.

In das Profil 2 eingelassen sind unter anderem auch Trittleisten 4 aus Kunststoff, welche als Trittschutz dienen und die Gefahr des Verkratzens des angrenzenden Profils 2 reduzieren.

Um eine Linienleuchte bereit zu stellen, ist an einer Seite des Profils 2 ein Lichtleiter aus Glas 5 mittels eines Montageelements 3 formschlüssig in einer entsprechenden Aussparung des Profils 2 eingelassen. Dieser kann beispielsweise eingeschoben werden.

Der Lichtleiter 5 aus Glas umfasst in diesem Ausführungsbeispiel eine Farbglasseele 6, insbesondere aus Weißglas. Über die Farbglasseele 6 wird Licht zur Seite hin über die Öffnung 25 ausgekoppelt.

Das Montageelement 3 ist als Kunststoffprofil ausgebildet und umfasst Formschlusselemente 8, welche in korrespondierenden Aussparungen 7 des Profils 2 sitzen.

Der Lichtleiter 5 aus Glas ist gegenüber dem angrenzenden Profil 2 rückversetzt, was diesen vor Beschädigungen schützt.

Ansonsten bildet der Lichtleiter 5 aus Glas unmittelbar die Lichtaustrittsfläche, durch welche das Licht durch die Öffnung 25 zu sehen ist.

Das Montageelement 3 hat des Weiteren noch Flügel 9, welche über den Lichtleiter 5 aus Glas hinausragen, was diesen zusätzlich vor Beschädigungen schützt.

Durch das Montageelement 3, welches den Lichtleiter 5 um zumindest 270° umschließt wird der Öffnungswinkel der Linienleuchte gegenüber einem Betrachter begrenzt. Dieser liegt bei unter 90°.

In diesem Ausführungsbeispiel ist das als Kunststoffprofil ausgebildete Montageelement 3 schwarz.

Aufgrund der transparenten Ausgestaltung des Lichtleiters 5 sieht der Betrachter im nicht-beleuchten Zustand das schwarze dahinterliegende Montagelement 3, so dass der Lichtleiter 5 im nicht-beleuchteten Zustand nahezu unsichtbar ist.

Die Linienleuchte sieht vielmehr einer eingelassenen Trittleiste 4 aus Kunststoff ähnlich.

Es versteht sich, dass bei dieser Ausführungsform der Erfindung, welche ein Trittbrett betrifft, der Lichtleiter 5 im eingebauten Zustand seitlich angeordnet ist, da sich ansonsten Schmutz in dem Trichter ansammeln könnte, welcher durch das Montageelement 3 gebildet wird.

Für einen Einbau auf der Oberseite ist denkbar, den Trichter der durch die Öffnung 25 gebildet wird, durch ein transparentes Kunststoffbauteil zu verschließen (nicht dargestellt).

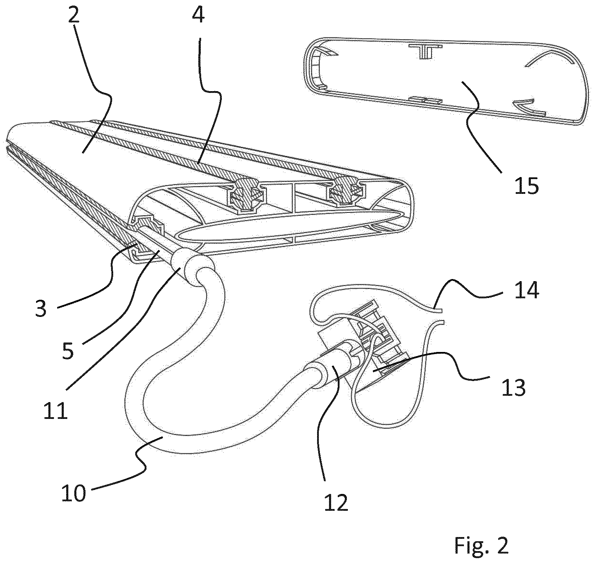

Fig. 2 zeigt in einer perspektivischen Ansicht eine Linienleuchte 1, welche ebenfalls als Trittbrett ausgebildet ist.

Zu erkennen ist das Profil 2 aus Metall, in welches die Trittleisten 4 eingelassen sind.

Der über das Montageelement 3 formschlüssig mit dem Profil 2 verbundene Lichtleiter 5 ist über einen flexiblen Lichtleiter 10 mit einer LED-Lichtquelle 13 verbunden.

Der flexible Lichtleiter 10 ist hierzu an seinen Enden mit jeweils einer Hülse 11, 12 terminiert. So kann beispielweise eine Steckverbindung bereit gestellt werden.

Die LED-Lichtquelle 13 ist vorzugsweise wasserdicht ausgebildet. Über die Kabel 14 wird die LED-Lichtquelle 13 mit Strom versorgt.

Da die LED-Lichtquelle 13 abgewinkelt eingesetzt werden kann, kann der Lichtleiter 5 nah am Seitenrand des Profils 2 angeordnet sein.

Das Profil 2 wird im fertig montierten Zustand mit der Kappe 15 verschlossen. In der Kappe 15 ist sodann die LED-Lichtquelle 13, sowie der flexible Lichtleiter 10 zur Verbindung angeordnet. Zu sehen ist mithin nur der Lichtleiter 5.

Diese Ausführungsvariante der Erfindung ermöglicht eine sehr einfache, aber robuste und wetterfeste Ausgestaltung eines Trittbretts mit einer Konturbeleuchtung, welche im unbeleuchteten Zustand nahezu unsichtbar ist.

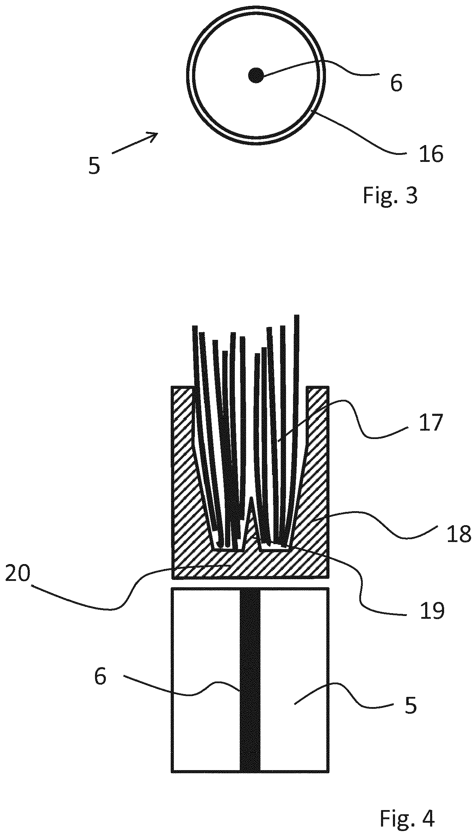

Fig. 3 zeigt, schematisch dargestellt, den verwendeten Lichtleiter 5 aus Glas.

Dieser umfasst eine Farbglasseele 6, insbesondere aus Weißglas.

Weiter umfasst der Lichtleiter 5 ein Hüllmaterial 16, welches eine niedrigere Brechzahl als das Kernglas aufweist, so dass hierdurch eine Totalreflektion erreicht wird.

Über die Farbglasseele 6 wird Licht zur Seite hin ausgekoppelt, indem die Farbglasseele 6 als Streuzentrum wirkt.

Bezugnehmend auf Fig. 4 soll schematisch die Einkopplung von Licht in den Lichtleiter 5 aus Glas erläutert werden.

Es wird als flexibler Lichtleiter ein Glasfaserbündel 17 verwendet, welches in der Regel in einem Schlauch (nicht dargestellt) angeordnet ist.

Zum Terminieren des Faserbündels 17 wird am Ende des Bündels der Schlauch entfernt und die einzelnen Glasfasern des Glasfaserbündels 17 werden in die Hülse 18 eingefüllt, welche zuvor mit einem transparenten optischen Klebstoff befüllt wurde.

Aus dem Boden 20 der Hülse steht gegenüber der Farbglasseele 6 ein Dorn 19 hervor, welcher beim Einbringen des Glasfaserbündels die Faser im Bereich der Farbglasseele 6 die einzelnen Glasfasern verdrängt, so dass kein oder nur wenig Licht direkt in die Farbglasseele 6 eingekoppelt wird.

Auf diese Weise wird eine inhomogene Abstrahlung im Randbereich vermieden.

Es versteht sich, dass weitere Kopplungselemente zum Koppeln von Hülse 18 und Lichtleiter 5 in dieser schematischen Zeichnung nicht dargestellt sind. Dies betrifft insbesondere Formschluss- oder Klemmelemente.

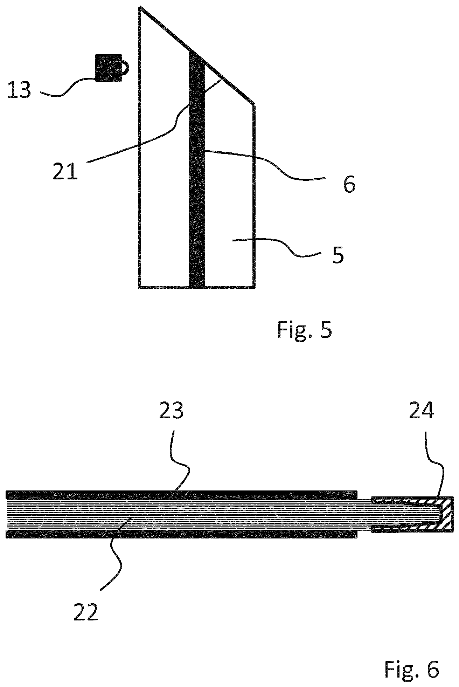

Fig. 5 zeigt eine alternative Ausführungsform, bei welcher der Lichtleiter 5 aus Glas mit der Farbglasseele 6 am Ende abgeschrägt ist. Licht der LED-Lichtquelle 13 wird von der Seite in den Lichtleiter 5 eingestrahlt und über eine Totalreflektion an der Fläche 21 umgelenkt und entlang des Lichtleiters 5 weitergeleitet.

Diese Ausführungsvariante ermöglicht gegenüber der in Fig. 2 dargestellten Ausführungsvariante eine noch kompaktere Ausgestaltung, geht aber in der Regel mit höheren Lichtverlusten und einer inhomogeneren Ausleuchtung im Randbereich einher.

Fig. 6 zeigt, schematisch dargestellt, eine nicht erfindungsgegenständliche Ausführungsform, bei welcher ein flexibles Glasfaserkabel 22 verwendet wird, um Licht zur Seite hin auszustrahlen.

Das Glasfaserkabel 22 ist über eine Hülse 24 an eine LED-Lichtquelle (nicht dargestellt) angekoppelt.

Der Schlauch 23 des Glasfaserbündels ist eingefärbt.

In einer Ausführungsform ist der Schlauch 23 schwarz eingefärbt und erscheint so im unbeleuchteten Zustand schwarz, so dass er kaum von angrenzenden Bauelementen zu unterscheiden ist.

Denkbar ist aber auch eine andersfarbige Einfärbung, welche in etwa die gleiche Farbe hat wie eine angrenzende Aufnahme, insbesondere ein angrenzendes Verkleidungsteil.

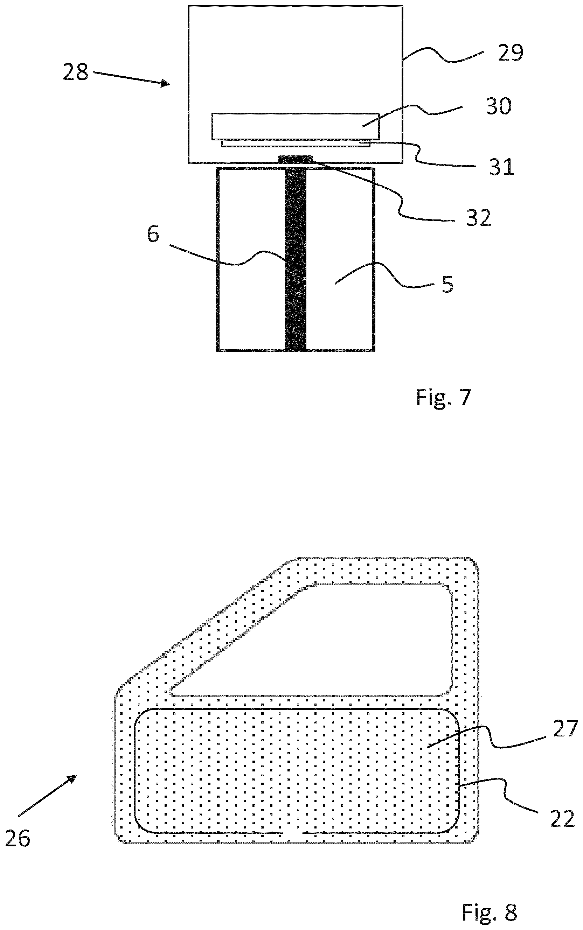

Fig. 7 zeigt in einer schematischen Darstellung, wie eine LED-Lichtquelle auch direkt an das Ende eines Lichtleiters 5 aus Glas angekoppelt ist.

Der Lichtleiter 5 aus Glas besteht in diesem Ausführungsbeispiel aus einem Glasstab mit einer Farbglasseele 6 (entsprechend der Ausführungsform gemäß Fig. 1 und Fig. 2).

Im Unterschied zu der in Fig. 1 und Fig. 2 dargestellten Ausführungsform wird hier in diesem Ausführungsbeispiel eine LED-Leuchte 28 direkt an das Ende des Lichtleiters 5 gesetzt.

Die LED-Leuchte 28 umfasst ein Gehäuse 29.

In dem Gehäuse 29 ist eine Platine 30 mit einer LED_31, in diesem Ausführungsbeispiel ausgebildet als Dünnschicht-LED, angeordnet.

Gegenüber der Farbglasseele 6 umfasst das Gehäuse 29 eine Maskierung 32, durch welche die Farbglasseele 6 abgeschattet wird.

Hierdurch werden ebenfalls Inhomogenitäten in der Nähe der Einkoppelstelle reduziert.

Die Maskierung 32 kann beispielsweise ein dunkel eingefärbter Bereich in einem sonst transparenten Gehäuseboden sein. Im Falle eines unten offenen Gehäuses (nicht dargestellt) kann die Maskierung auch als Abdeckung bereitgestellt werden, welche über Stege mit Seitenwänden des Gehäuses verbunden ist.

Fig. 8 zeigt in einer schematischen Darstellung eine Fahrzeugtür 26, in welche als Ambientebeleuchtung ein seitenemittierendes Glasfaserkabel 22 eingesetzt ist.

Die Fahrzeugtür 26 umfasst hierfür innenseitig eine Verkleidung 27, beispielsweise aus einem Kunststoff. In die Verkleidung 27 ist eine Nut eingebracht, welche die Kontur der Ambientebeleuchtung vorgibt.

In diese Nut wird das Glasfaserkabel 22 eingeklemmt oder eingeklebt.

In einer Ausführungsform wird ein Glasfaserkabel 22 mit einem dunkel eingefärbten Schlauch verwendet. Vorzugsweise ist bei dieser Ausführungsform der Erfindung auch die angrenzende Verkleidung 27 schwarz oder dunkelgrau.

Im unbeleuchteten Zustand ist das Glasfaserkabel 22 so kaum zu erkennen, wohingegen bei Dunkelheit eine gut sichtbare und optisch ansprechende Ambientebeleuchtung bereitgestellt wird.

Bei Verwendung eines unbunt eingefärbten Schlauchs kann insbesondere auch eine RGB-Lichtquelle verwendet werden. Dies ermöglicht es auch, die Ambientebeleuchtung in der Lichtfarbe verändern zu können.

Bei einer anderen Ausführungsform ist der Schlauch bunt eingefärbt. Vorzugsweise ist bei dieser Ausführungsform der Erfindung auch die angrenzende Verkleidung 27 in etwa der gleichen Farbe ausgebildet, die dem Schlauch entspricht.

Es hat sich herausgestellt, dass bei dieser Ausführungsform lieber einer LED-Lichtquelle verwendet wird, deren Farbe der Farbe des Schlauchs angepasst ist, insbesondere eine LED-Lichtquelle mit lediglich einem einzigen Emissionsmaximum, also eine Lichtquelle, die vorzugsweise in einem engen Spektralbereich emittiert.

So lässt sich auch mit einem bunt eingefärbten Schlauch eine Ambientebeleuchtung mit homogenem Farbeindruck bereitstellen.

Bei allen Ausführungsformen kann die Rückseite des Schlauchs, also die dem Betrachter abgewandte Seite des Schlauchs des eingeklemmten oder eingeklebten Glasfaserkabels 22, als Reflexionsfläche ausgebildet sein. Dies kann durch ein coextrudiertes reflektierendes Material, durch eine Lackierung oder durch einen eingelegten Streifen eines reflektierenden Materials, beispielsweise eine Metallfolie, realisiert sein.

Bei dieser Ausführungsform ist es vorteilhaft, den Schlauch außen nicht genau kreisrund auszugestalten, um ein orientiertes Einbringen des Glasfaserkabels 22 in die Nut zu erleichern. Insbesondere kann der Schlauch mit sich axial nach außen erstreckenden Vorsprüngen versehen sein, die eine Verdrehung des Schlauchs verhindern.

Durch die Erfindung konnten konturenscharfe Linienleuchten bereit gestellt werden, welche robust und wetterfest sind und gleichzeitig im unbeleuchteten Zustand kaum zu erkennen sind.

### Bezugszeichenliste

- 1: Linienleuchte
- 2: Profil
- 3: Montageelement
- 4: Trittleiste
- 5: Lichtleiter aus Glas
- 6: Farbglasseele
- 7: Aussparung
- 8: Formschlusselement
- 9: Flügel
- 10: flexibler Lichtleiter
- 11: Hülse
- 12: Hülse
- 13: LED-Lichtquelle
- 14: Kabel
- 15: Kappe
- 16: Hüllmaterial
- 17: Glasfaserbündel
- 18: Hülse
- 19: Dorn
- 20: Boden
- 21: Fläche
- 22: Glasfaserkabel
- 23: Schlauch
- 24: Hülse
- 25: Öffnung
- 26: Fahrzeugtür
- 27: Verkleidung
- 28: LED-Leuchte
- 29: Gehäuse
- 30: Platine
- 31: LED
- 32: Maskierung

## Patentansprüche

1. Linienleuchte (1), umfassend einen seitenemittierenden transparenten Lichtleiter (5) aus Glas, welcher formschlüssig mittels eines Montageelements (3) in einem Profil (2) gehalten ist, **dadurch gekennzeichnet, dass** das Montagelement (3) seitlich über den Lichtleiter (5) hinausragende Flügel (9) aufweist, wobei der Lichtleiter (5) gegenüber dem angrenzenden Profil (2) rückversetzt ist.

2. Linienleuchte (1) nach dem vorstehenden Anspruch, **dadurch gekennzeichnet, dass** das Montageelement (3) und/oder das Profil (2) korrespondierende Formschlusselemente (8) aufweisen, mit welchen das Montageelement (3) gesichert wird.

3. Linienleuchte (1) nach einem der vorstehenden Ansprüche, **dadurch gekennzeichnet, dass** das Montagelement (3) gegenüber dem Profil (2) gegen Verdrehen gesichert ist.

4. Linienleuchte (1) nach einem der vorstehenden Ansprüche, **dadurch gekennzeichnet, dass** der Öffnungswinkel der Linienleuchte (1) gegenüber einem Betrachter durch das Montagelement (3) begrenzt wird, wobei der Öffnungswinkel weniger als 90° beträgt.

5. Linienleuchte (1) nach einem der vorstehenden Ansprüche, **dadurch gekennzeichnet, dass** auf einer Rückseite des Lichtleiters (5) das Montageelement (3) und/oder das Profil (2) dunkel ist, insbesondere im L*a*b*-Farbraum einen L*-Wert von unter 40, vorzugsweise von unter 30, besonders bevorzugt von unter 15 hat.

6. Linienleuchte (1) nach einem der vorstehenden Ansprüche, **dadurch gekennzeichnet, dass** der transparente Lichtleiter (5) aus Glas gegenüber dem angrenzenden Profil um mindestens 0,5 mm, vorzugsweise um mindestens 1 mm rückversetzt ist.

7. Linienleuchte (1) nach einem der vorstehenden Ansprüche, **dadurch gekennzeichnet, dass** der transparente Lichtleiter (5) aus Glas von einer Betrachterseite aus gesehen frei liegt.

8. Linienleuchte (1) nach einem der vorstehenden Ansprüche, **dadurch gekennzeichnet, dass** der transparente Lichtleiter (5) aus Glas über einen flexiblen Lichtleiter (10) mit einer abgewinkelt gegenüber dem transparenten Lichtleiterangeordneten LED-Lichtquelle (13) verbunden ist.

9. Linienleuchte (1) nach dem vorstehenden Anspruch, **dadurch gekennzeichnet, dass** der flexible Lichtleiter (10) und die LED-Lichtquelle in einer auf das Profil (2) aufgesetzten Kappe angeordnet sind.

10. Linienleuchte nach einem der vorstehenden Ansprüche, **dadurch gekennzeichnet, dass** der seitenemittierende transparente Lichtleiter (5) aus Glass zumindest eine Farbglasseele (6) zum seitlichen Auskoppeln von Licht umfasst, wobei der seitenemittierende transparente Lichtleiter (5) mittels eines Glasfaserkabels (22) an eine Lichtquelle (13) angeschlossen ist, welches zumindest gegenüber dem seitenemittierenden Lichtleiter (5) mittels einer Hülse (18) terminiert ist, wobei die der Boden (20) der Hülse (18) gegenüber der Farbglasseele (6) einen nach innen ragenden Dorn (19) umfasst oder abgedeckt ist.

11. Linienleuchte nach einem der Ansprüche 1-9, **dadurch gekennzeichnet, dass** der seitenemittierende transparente Lichtleiter (5) dass der seitenemittierende transparente Lichtleiter (5) aus Glas zumindest eine Farbglasseele (6) zum seitlichen Auskoppeln von Licht umfasst, und wobei in zumindest ein Ende des seitenemittierenden Lichtleiters (5) Licht eingekoppelt wird, vorzugsweise mittels einer direkt an das Ende des seitenemittierenden Lichtleiters (5) angrenzenden Lichtquelle (13), **dadurch gekennzeichnet, dass** das Ende des seitenemittierenden Lichtleiters (5) im Bereich der Farbglasseele (6) maskiert ist.

12. Verwendung einer Linienleuchte (1) nach einem der vorstehenden Ansprüche in oder an einem Fahrzeug, insbesondere einem Kraftfahrzeug, Schiff oder Flugzeug, insbesondere in einem Trittbrett, als Konturbeleuchtung in einem Möbelstück oder Bauteil oder einem medizinischen Gerät.

## Claims

1. A linear illumination device (1), comprising a side-emitting transparent light guide (5) made of glass, which is held in a profile (2) in a form-fitting manner by means of a mounting element (3), **characterised in that** the mounting element (3) has wings (9) projecting laterally beyond the light guide (5), wherein the light guide (5) is recessed relative to the adjoining profile (2).

2. The linear illumination device (1) according to the preceding claim, **characterised in that** the mounting element (3) and/or the profile (2) have corresponding form-fitting elements (8), by means of which the mounting element (3) is secured.

3. The linear illumination device (1) according to one of the preceding claims, **characterised in that** the mounting element (3) is secured against rotation with respect to the profile (2).

4. The linear illumination device (1) according to one of the preceding claims, **characterised in that** the opening angle of the linear illumination device (1) is delimited with respect to a viewer by the mounting element (3), wherein the opening angle is less than 90°.

5. The linear illumination device (1) according to one of the preceding claims, **characterised in that** on a rear side of the light guide (5) the mounting element (3) and/or the profile (2) is dark, in particular has an L* value in the L*a*b* colour space of less than 40, preferably less than 30, particularly preferably less than 15.

6. The linear illumination device (1) according to one of the preceding claims, **characterised in that** the transparent light guide (5) made of glass is recessed by at least 0.5 mm, preferably by at least 1 mm, relative to the adjoining profile.

7. The linear illumination device (1) according to one of the preceding claims, **characterised in that** the transparent light guide (5) made of glass is freely visible from a viewer's side.

8. The linear illumination device (1) according to one of the preceding claims, **characterised in that** the transparent light guide (5) of glass is connected via a flexible light guide (10) to an LED light source (13) arranged at an angle with respect to the transparent light guide.

9. The linear illumination device (1) according to the preceding claim, **characterised in that** the flexible light guide (10) and the LED light source are arranged in a cap placed on the profile (2).

10. The linear illumination device according to one of the preceding claims, **characterised in that** the side-emitting transparent light guide (5) made of glass comprises at least one coloured glass core (6) for the lateral decoupling of light, wherein the side-emitting transparent light guide (5) is connected to a light source (13) by means of a glass-fibre cable (22) which is terminated at least with respect to the side-emitting light guide (5) by means of a ferrule (18), wherein the base (20) of the ferrule (18) opposite the coloured glass core (6) comprises an inwardly projecting pin (19) or is covered.

11. The linear illumination device according to one of claims 1-9, **characterised in that** the side-emitting transparent light guide (5) of glass comprises at least one coloured glass core (6) for the lateral decoupling of light, and wherein light is coupled in at least one end of the side-emitting light guide (5), preferably by means of a light source (13) which directly adjoins the end of the side-emitting light guide (5), **characterised in that** the end of the side-emitting light guide (5) is masked in the region of the coloured glass core (6).

12. Use of a linear illumination device (1) according to one of the preceding claims in or on a vehicle, in particular a motor vehicle, ship or aircraft, in particular in a footboard, as contour illumination in a piece of furniture or a component or a medical device.

## Revendications

1. Dispositif d'éclairage linéaire (1), comprenant un guide de lumière (5) transparent à émission latérale en verre, qui est retenu par complémentarité de forme au moyen d'un élément de montage (3) dans un profil (2), **caractérisé en ce que** l'élément de montage (3) présente des ailettes (5) en saillie latéralement au-dessus du guide de lumière (5), le guide de lumière (5) étant décalé vers l'arrière par rapport au profil (2) adjacent.

2. Dispositif d'éclairage linéaire (1) selon la revendication précédente, **caractérisé en ce que** l'élément de montage (3) et/ou le profil (2) présentent des éléments à coopération de forme (8) correspondants, avec lesquels l'élément de montage (3) est fixé.

3. Dispositif d'éclairage linéaire (1) selon une des revendications précédentes, **caractérisé en ce que** l'élément de montage (3) est fixé pour ne pas tourner par rapport au profil (2).

4. Dispositif d'éclairage linéaire (1) selon une des revendications précédentes, **caractérisé en ce que** l'angle d'ouverture du dispositif d'éclairage linéaire (1) est limité par l'élément de montage (3) par rapport à un observateur, l'angle d'ouverture étant inférieur à 90 °.

5. Dispositif d'éclairage linéaire (1) selon une des revendications précédentes, **caractérisé en ce que**, sur une face arrière du guide de lumière (5), l'élément de montage (3) et/ou le profil (2) est sombre, en particulier possède, dans un espace couleur L*a*b*, une valeur L* inférieure à 40, de préférence inférieure à 30, de manière particulièrement préférée inférieure à 15.

6. Dispositif d'éclairage linéaire (1) selon une des revendications précédentes, **caractérisé en ce que** le guide de lumière (5) transparent en verre est décalé vers l'arrière par rapport au profil adjacent d'au moins 0,5 mm, de préférence d'au moins 1 mm.

7. Dispositif d'éclairage linéaire (1) selon une des revendications précédentes, **caractérisé en ce que** le guide de lumière (5) transparent en verre est exposé lorsqu'il est observé du côté de l'observateur.

8. Dispositif d'éclairage linéaire (1) selon une des revendications précédentes, **caractérisé en ce que** le guide de lumière (5) transparent en verre est relié par le biais d'un guide de lumière (10) flexible à une source de lumière à DEL (13) disposée de manière coudée par rapport au guide de lumière transparent.

9. Dispositif d'éclairage linéaire (1) selon la revendication précédente, **caractérisé en ce que** le guide de lumière (10) flexible et la source de lumière à DEL sont disposés dans un capuchon placé sur le profil (2).

10. Dispositif d'éclairage linéaire selon une des revendications précédentes, **caractérisé en ce que** le guide de lumière (5) transparent à émission latérale en verre comprend au moins une âme en verre de couleur (6) pour un découplage latéral de la lumière, le guide de lumière (5) transparent à émission latérale étant raccordé à une source de lumière (13) par le biais d'un câble en fibre de verre (22), qui se termine au moins par rapport au guide de lumière (5) à émission latérale avec une gaine (18), qui comprend ou recouvre un mandrin (19) faisant saillie vers l'intérieur depuis le fond (20) de la gaine (18) par rapport à l'âme en verre de couleur (6).

11. Dispositif d'éclairage linéaire selon une des revendications 1 à 9, **caractérisé en ce que** le guide de lumière (5) transparent à émission latérale en verre comprend au moins une âme en verre de couleur (6) pour le découplage latéral de la lumière et, dans au moins une extrémité du guide de lumière (5) émission latérale, la lumière étant injectée, de préférence au moyen d'une source de lumière (13) directement adjacente à l'extrémité du guide de lumière (5) à émission latérale, **caractérisé en ce que** l'extrémité du guide de lumière (5) à émission latérale est masquée dans la zone de l'âme en verre de couleur (6).

12. Utilisation d'un dispositif d'éclairage linéaire (1) selon une des revendications précédentes dans ou sur un véhicule, en particulier un véhicule automobile, un navire ou un aéronef, en particulier dans un marchepied, comme éclairage de contour dans une pièce d'ameublement ou un composant ou un appareil médical.
